# EUROPÄISCHE PATENTSCHRIFT

(11) **EP 0 874 744 B1**
(45) Veröffentlichungstag und Bekanntmachung des Hinweises auf die Patenterteilung: **18.10.2000**
(21) Anmeldenummer: 97900989.1
(22) Anmeldetag: 10.01.1997
(51) Int. Cl.: B60R 21/26

(54) **GASGENERATOR ZUM ERZEUGEN EINER GASMISCHUNG**
GAS GENERATOR FOR PRODUCING A GAS MIXTURE
GENERATEUR DE GAZ POUR LA PRODUCTION D'UN MELANGE DE GAZ

(30) Priorität: 20.01.1996 DE 19602008
(43) Veröffentlichungstag der Anmeldung: 04.11.1998
(73) Patentinhaber: TRW Airbag Systems GmbH & Co. KG, 84544 Aschau am Inn (DE)
(72) Erfinder: BAUER, Hermann, D-89518 Heidenheim (DE); FÜRST, Franz, D-85098 Grossmehring (DE); WINTERHALDER, Marc, D-84518 Garching (DE); ZEUNER, Siegfried, D-81369 München (DE)
(74) Vertreter: Kitzhofer, Thomas, Dipl.-Ing.
(86) Internationale Anmeldenummer: EP9700085
(87) Internationale Veröffentlichungsnummer: WO9726159

(56) Entgegenhaltungen:
- EP-A- 0 455 435
- EP-A- 0 539 872
- EP-A- 0 604 001
- WO-A-96/18527
- US-A- 3 723 205
- US-A- 3 758 131
- US-A- 4 981 534
- US-A- 5 033 772

## Beschreibung

Die Erfindung betrifft einen Gasgenerator zum Erzeugen einer Gasmischung nach dem Oberbegriff des Anspruchs 1.

Ein derartiger Gasgenerator ist durch die US 5,022,674 bekannt geworden.

Gasgeneratoren, zu denen auch Hybridgasgeneratoren zählen, dienen dazu, im Falle eines harten Aufpralls eines Kraftfahrzeugs eine Gasmischung zum Füllen eines Luftsackes zu erzeugen. Der Luftsack schützt einen Fahrzeuginsassen vor dem Aufprall auf harte Fahrzeuginnenteile wie das Lenkrad oder die Seitenverkleidungen. Innerhalb dieser Gasgeneratoren ist im allgemeinen eine auf pyrotechnische Art zu entzündende Treibstoffladung vorgesehen. Wenn durch einen Stromimpuls von der einen Fahrzeug-Crash erkennenden Sensorik eine Anzündeeinheit aktiviert wird, werden heiße Partikel erzeugt, die dann auf die Oberfläche eines meist in Tablettenform vorliegenden Treibstoffs treffen. Dieser wird dann selbst entzündet, brennt in der sogenannten Brennkammer unter einem hohen Druck ab und erzeugt das Treibgas. Das Treibgas strömt aus der Brennkammer aus und mischt sich mit einem inerten Vorratsgas, so daß innerhalb der sogenannten Vorratskammer ein hoher Druck entsteht, der eine Bersteinrichtung zum Zerbrechen bringt. Anschließend kann die Gasmischung aus dem Gasgenerator ausströmen und den Luftsack aufblasen. Da keine reine Gasmischung entsteht, sondern eine Mischung von flüssigen und festen Bestandteilen vorhanden ist, wird die Gasmischung nach Verlassen der Vorratskammer durch eine Filterkammer geleitet, in der entsprechende Filter vorgesehen sind. Dadurch wird die Gasmischung vor dem Austritt aus dem Gasgenerator gereinigt.

Innerhalb eines Gasgenerators, der in der US 5,033,772 gezeigt ist, ist eine von einer Vorratskammer umgebene Brennkammer derart angeordnet, daß die Brennkammer und die Vorratskammer durch Austrittsöffnungen der Brennkammer unmittelbar im Bereich der Ausströmöffnung der Vorratskammer miteinander verbunden sind.

Wenn nun eine Treibstoffladung mit Hilfe einer Anzündeeinheit innerhalb der Brennkammer gezündet wird und abbrennt, entsteht ein Treibgas, das durch die Austrittsöffnungen in diesen Bereich der Vorratskammer vor der Ausströmöffnung geleitet wird. Folglich erhöht sich der Druck auf die Bersteinrichtung, in der Regel eine zerbrechliche Berstscheibe oder -folie, die die Ausströmöffnung nach Überschreiten eines Grenzdruckes freigibt.

Aufgrund der Anordnung der Austrittsöffnungen der Brennkammer kann sich nur eine geringe Durchmischung des Treibgases mit dem Vorratsgas ergeben. Bei dem bekannten Gasgenerator findet keine Integration des heißen Treibgasanteils in das Vorratsgas statt. Da sowohl die Brennkammer als auch die Vorratskammer zylinderförmig ausgebildet sind, und die Vorratskammer die Brennkammer umgibt, findet nach dem Ausströmen des Treibgases in das Vorratsgas keine Erhöhung des Innendrucks innerhalb der Vorratskammer statt, die über den gesamten Bereich der Vorratskammer konstant ist. Es kommt zu einer partiellen Druckerhöhung im Bereich der Bersteinrichtung, so daß die Druckbeaufschlagung der Bersteinrichtung im wesentlichen durch das erzeugte heiße Treibgas stattfindet.

Folglich ist die Bersteinrichtung einer hohen Temperaturbelastung ausgesetzt. Daher erfolgt eine Freigabe der Ausströmöffnung nicht nur durch ein Zerbrechen der Bersteinrichtung, sondern meist auch durch ein Aufschmelzen der Bersteinrichtung. Somit ist nicht gewährleistet, daß eine stets gleich große Querschnittsöffnung zum Ausströmen des Gasgemisches freigegeben wird. Dies beeinträchtigt die Funktionsweise des gesamten Airbagsystems, da es zu einem zeitlich verzögerten Druckanstieg innerhalb des Luftsackes des Airbagsystems kommt.

Durch die unmittelbare Anordnung der Austrittsöffnungen der Brennkammer im Bereich der Berstscheibe ist es notwendig, Filterelemente und Abkühleinrichtungen im Bereich der Austrittsöffnungen anzuordnen, um den obengenannten Problemen vorzubeugen. Dies führt aber zu einer aufwendigen und teueren Ausgestaltung des Gasgenerators und beeinträchtigt andererseits die Durchmischung des entstandenen Treibgases mit dem Vorratsgas noch weiter.

Aus der EP 0 455 435 A2 ist ein mehrstufiger Hybridgasgenerator bekannt, bei dem im Falle eines Fahrzeugunfalls eine Trennwand eines Gasvorratsbehälters zerstört wird, um das innerhalb des Vorratsbehälters befindliche Gas in einen Luftsack ausströmen zu lassen. Die Zerstörung der Trennwand und die dadurch erfolgende Freigabe einer Ausströmöffnung wird durch eine mit Hilfe von Sensoren gesteuerte elektrische Zündeinrichtung bewirkt. Um weiteres Gas zum Aufblasen des Luftsackes nachliefern zu können, erfolgt eine zweite zeitlich verzögerte Gasentwicklung durch das Entzünden einer Treibstoffladung. Nachteiligerweise muß bei diesem Gasgenerator eine separate elektrische Zündeinrichtung zum Aufbrechen der Trennwand vorgesehen werden, da eine Zerstörung der Trennwand nicht durch den innerhalb des Gasvorratsbehälters entstehenden Gasinnendruck erfolgen kann. Somit ist ein zusätzliches Bauteil nötig, das die Bauweise des bekannten Gasgenerators aufwendig und kompliziert gestaltet und seine Fertigung verteuert.

Nach der Lehre der EP 0 539 872 A1 wird vorgeschlagen, eine Trennwand zwischen einer Brennkammer und einer Vorratskammer, in der sich ein Flüssiggas befindet, durch einen beweglichen Kolben zu zerstören. Der Antrieb des Kolbens erfolgt durch ein innerhalb der Brennkammer in Folge eines Abbrandes der Treibstoffladung entstehendes Treibgas. Da das Treibgas einerseits zum Antrieb des Kolbens und andererseits zum Entzünden des Flüssiggases genutzt wird, sind bei diesem Gasgenerator mehrere Strömungskanäle notwendig, um das heiße Treibgas mit dem Flüssiggas zu mischen. Nach einer Verbrennung der Treibstoffladung in einem nachgeschalteten Verbrennungsraum gelangen die durch die Verbrennung der Treibstoffladung entstandenen Treibgase über Ausströmöffnungen in einen aufblasbaren Luftsack. Die Ausströmöffnungen sind immer geöffnet und nicht abgedeckt. Daher kann sich in einem Verbrennungsraum dieses Gasgenerators kein Druck aufbauen, der sich schlagartig durch gezielte und definierte Freigabe von Ausströmöffnungen bzw. durch das Ausströmen der Gasmischung in einen Luftsack abbauen kann.

Auch in der EP 0 604 001 A1 ist ein Gasgenerator beschrieben, der einen Vorratsbehälter mit einem darin befindlichen und unter Druck stehenden Gas aufweist. Im Bereich einer zerbrechlichen Trennwand des Vorratsbehälters ist ein Kolben beweglich ausgebildet. Mit Hilfe einer Anzündeinrichtung wird zunächst ein Treibgas zur Bewegung des Kolbens erzeugt. Anschließend wird eine an dem Kolben befindliche Zündladung ebenfalls entzündet, so daß der Kolben bei seiner weiteren Bewegung die Trennwand zerstört und als Träger des entzündeten Zündmaterials dient. Dies ermöglicht ein Entzünden des in dem Vorratsbehälter unter Druck stehenden Gases. Auch bei diesem Gasgenerator ist ein Projektil zur Zerstörung der Bersteinrichtung vorgesehen, die eine Ausströmöffnung des Vorratsbehälters abdeckt. Da die Zerstörung der Bersteinrichtung nicht durch den Innendruck innerhalb des Vorratsbehälters möglich ist, sind notwendigerweise zusätzliche Bauteile, ein beweglicher Kolben und entsprechende Antriebseinrichtungen erforderlich.

Aus der US 5,022,674 ist ein gattungsgemäßer Gasgenerator bekannt. Bei diesem Gasgenerator ist der Treibstoff hermetisch zur Vorratskammer über eine Berstscheibe abgedichtet. Erst nach dem Zünden des Treibstoffes wird die Berstscheibe zerstört, und das heiße Treibgas kann in die Vorratskammer strömen und sich dort mit dem kalten Druckgas vermischen. Ferner tritt das heiße Treibgas aufgrund von ausschließlich axialen Austrittsöffnungen im Brennkammergehäuse nur in axialer Richtung aus der Brennkammer aus. Das sich um die Brennkammer herum befindliche kalte Gas kann sich aber dadurch sehr schlecht mit dem heißen Druckgas vermischen. Das Zerstören der Bersteinrichtung erfolgt durch eine eigene Zerstörungseinrichtung, die nahe der Bersteinrichtung und außerhalb der Druckkammer angeordnet ist.

Aus der nachveröffentlichten WO 96/18527 ist ein Gasgenerator mit zwei in der Brennkammer angeordneten, voneinander getrennten Treibstoffladungen bekannt, die nacheinander gezündet werden und zu einer Druckerhöhung führen, welche das Zerstören der Bersteinrichtung hervorrufen.

Der vorliegenden Erfindung liegt die Aufgabe zugrunde, den Gasgenerator der eingangs beschriebenen Art dahingehend weiterzuentwickeln, daß er aus möglichst wenigen Bauteilen einfach aufgebaut ist und die Anordnung von Vorratskammer und Brennkammer eine möglichst gleichmäßige Durchmischung von Vorratsgas und Treibgas und eine möglichst gleichmäßige Erhöhung des Innendrucks innerhalb der Vorratskammer gewährleistet.

Diese Aufgabe wird auf überraschend einfache Art und Weise dadurch gelöst, daß die Austrittsöffnungen der Brennkammer nicht druckdicht gegenüber dem Vorratsgas in der Vorratskammer ausgeführt sind, also die Brennkammer im nichtaktivierten Zustand offen zur Vorratskammer ist. Ferner ist keine zusätzliche, eigene Vorrichtung zum Zerstören der Bersteinrichtung vorgesehen, sondern das Treibgas führt zu einer Druckerhöhung in der Vorratskammer und damit zum Zerstören der Bersteinrichtung.

Beim erfindungsgemäßen Gasgenerator ist die Brennkammer nicht hermetisch gegenüber der Vorratskammer abgedichtet, sondern stets zu ihr offen. Dies vereinfacht den Aufbau des Gasgenerators ebenso wie das Fehlen einer eigenen Einrichtung zum Zerstören der Bersteinrichtung. Überraschenderweise hat sich sogar gezeigt, daß die Druckbeaufschlagung des Treibstoffs durch das Vorratsgas die Abbrandeigenschaften des Treibstoffs verbessert, insbesondere zu einem schnelleren Abbrand und daher zu einem schnelleren Druckanstieg in der Vorratskammer führt. Dies kann dazu ausgenutzt werden, daß der erzeugte hohe Druck zum Zerstören der Bersteinrichtung führt.

Beim erfindungsgemäßen Gasgenerator muß das Treibgas in axialer Richtung des Gasgenerators durch nahezu das gesamte Vorratsgas strömen, um zur Ausströmöffnung und zur Bersteinrichtung auf der anderen Seite der Vorratskammer zu gelangen. Dies gewährleistet eine exzellente Durchmischung des Treibgases und des Vorratsgases, so daß das kalte, inerte Vorratsgas das heiße Treibgas abkühlen kann. Dies macht zusätzliche Abkühleinrichtungen, wie Abkühlbleche und Filterelemente, nahezu überflüssig. Durch die Abkühlung des heißen Treibgases über den Temperaturausgleich mit dem Vorratsgas können feste Bestandteile innerhalb des austretenden Treibgases ebenso abgekühlt werden und beispielsweise an einer Gehäuseinnenwand der Vorratskammer kondensieren.

Da das erzeugte Treibgas durch die Austrittsöffnungen der Brennkammer gezielt und fein verteilt in das Vorratsgas abgegeben wird, kommt es an vielen Stellen innerhalb der vorzugsweise zylinderförmigen Vorratskammer zu einer Wechselwirkung zwischen dem Treibgas und dem Vorratsgas, so daß eine gleichmäßige Erhöhung des Innendrucks innerhalb der Vorratskammer erfolgt.

Aus diesen Gründen ist eine reproduzierbare Druckbeaufschlagung der Bersteinrichtung gewährleistet. Daher wird ein Luftsack des Airbagsystems unter reproduzierbaren Randbedingungen mit einem immer gleichen Druckanstieg und einem immer gleichen Innendruck aufgeblasen.

Bei einer besonders bevorzugten Ausführungsform weist die zylinderförmig ausgebildete Brennkammer an ihrer Außenumfangsfläche mehrere Austrittsöffnungen in radialer Richtung auf. Die Austrittsöffnungen sind der Gehäuseinnenwand der Vorratskammer gegenüberliegend angeordnet. Heiße Partikel innerhalb des Treibgases, die beim Abbrand des Treibstoffes entstehen, können sich an der kalten Gehäusewand ablagern und somit aus der Gasmischung ohne zusätzliche Filterelemente bereits in der Vorratskammer ausgefiltert werden. Das heiße Treibgas kühlt sich durch das umgebende kalte Vorratsgas und insbesondere die kalte Gehäusewand so stark ab, daß die gasförmigen Partikel sehr schnell in den festen Aggregatzustand übergehen. Durch das radiale Ausströmen des Treibgases aus der Brennkammer treffen die heißen Partikel innerhalb des Treibgases auf die Gehäusewand der Vorratskammer und kondensieren dort, weil innerhalb der Vorratskammer nur eine geringe Strömungsgeschwindigkeit vorliegt.

Bei einer weiteren vorteilhaften Ausführungsform verjüngt sich ein Ende der Vorratskammer konisch und bildet die Ausströmöffnung. Die Brennkammer dieser Ausführungsform ist mit einer Rückwand an dem anderen Ende der Vorratskammer befestigt. Durch die konische Ausbildung der Vorratskammer wird der innerhalb der Vorratskammer entstehende Innendruck zur Ausströmöffnung hin ausgerichtet, damit die Bersteinrichtung gleichmäßig und gezielt druckbeaufschlagt werden kann. Durch Befestigung der Brennkammer an der Rückwand der Vorratskammer kann nahezu die gesamte Brennkammer von dem inerten Vorratsgas innerhalb der Vorratskammer umströmt werden. Folglich können die in radialer Richtung aus der Brennkammer austretenden heißen Treibgase optimal in das Vorratsgas geleitet werden.

Ebenfalls ist es bevorzugt, daß zusätzlich zur einstufigen Ausbildung des Gasgenerators mit Brennkammer und Vorratskammer eine Zusatzbrennkammer vorgesehen ist, die eine zweite Leistungsstufe beinhaltet. Nach dem Ausströmen der Gasmischung in den Luftsack kann durch den Abbrand einer Treibstoffladung innerhalb der Zusatzbrennkammer eine weitere Erhöhung des Innendrucks innerhalb des Luftsacks erreicht werden. Durch den Abbrand des Treibstoffmaterials in der Zusatzbrennkammer kann die Bersteinrichtung ebenfalls druckbeaufschlagt werden, so daß gegebenenfalls die Zerstörung der Bersteinrichtung unterstützt werden kann. Üblicherweise jedoch wird das Treibstoffmaterial in der Zusatzbrennkammer nach Zerstörung der Bersteinrichtung gezündet.

Bevorzugt ist es ebenfalls, daß innerhalb der Zusatzbrennkammer Düsen zur Strömungsführung des in der Zusatzkammer erzeugten heißen Treibgases im Bereich der Bersteinrichtung vorgesehen sind. Dies führt zu einer zielgerichteten Druckbeaufschlagung der Bersteinrichtung durch die innerhalb der Zusatzbrennkammer entstehenden Treibgase.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand zweiter Ausführungsbeispiele näher erläutert.

Es zeigt:
- Fig. 1: einen erfindungsgemäßen einstufigen Gasgenerator;
- Fig. 2: einen erfindungsgemäßen zweistufigen Gasgenerator.

Die Figuren der Zeichnungen zeigen den erfindungsgemäßen Gegenstand teilweise stark schematisiert und sind nicht notwendigerweise maßstäblich zu verstehen.

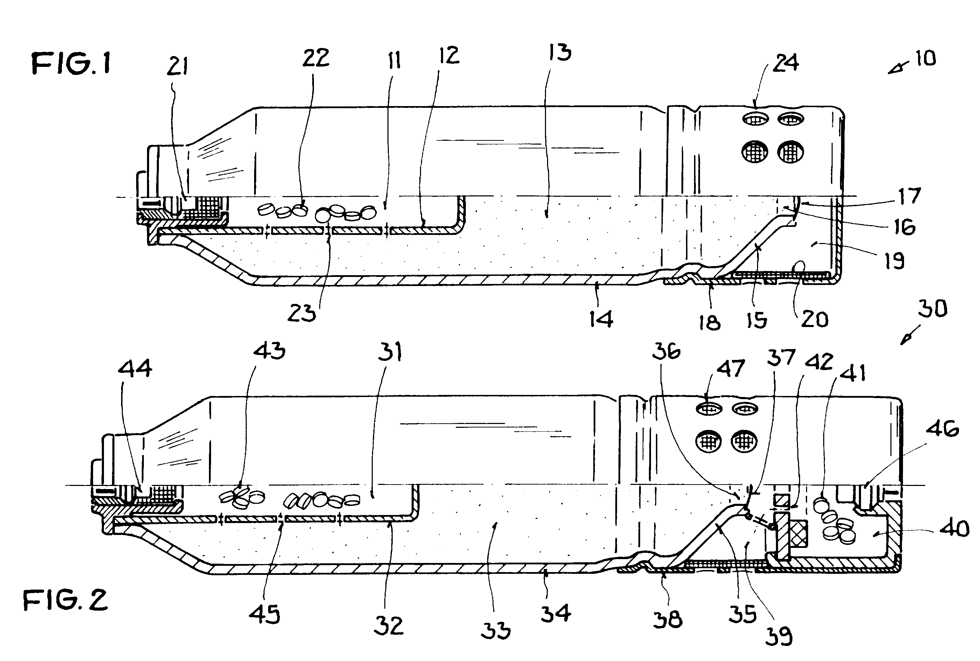

in der Fig. 1 ist ein Gasgenerator 10 teilweise perspektivisch und teilweise in einem Längsschnitt gezeigt. Der Gasgenerator 10 besteht im wesentlichen aus einer Brennkammer 11 mit einem Brennkammergehäuse 12, das von einer Vorratskammer 13 mit einem vorratskammergehäuse 14 umgeben ist. Ein luftsackseitiges Ende 15 der Vorratskammer 13 verjüngt sich konisch und bildet eine Ausströmöffnung 16. Die Ausströmöffnung 16 ist im in der Figur gezeigten nichtaktivierten Zustand des Gasgenerators 10 durch eine Bersteinrichtung 17 verschlossen. An dem Ende 15 ist ein Filterkammergehäuse 18 formschlüssig mit dem Vorratskammergehäuse 14 verbunden, so daß sich an die Vorratskammer 13 hinter der Ausströmöffnung 16 eine Filterkammer 19 anschließt. An einer Innenwand des Filterkammergehäuses 18 ist ein Filter 20 angeordnet.

Wenn eine in der Figur nicht gezeigte Sensorik des Airbagsystems einen Fahrzeugunfall mit einem harten Aufprall des Fahrzeugs erkennt, wird eine Anzündeeinheit 21 des Gasgenerators 10 aktiviert, so daß eine Treibstoffladung 22 innerhalb der Brennkammer 11 entzündet und abbrennen kann. Durch den Abbrand der Treibstoffladung 22, im gezeigten Ausführungsbeispiel ein in Tablettenform vorliegender Feststoff, entsteht ein Treibgas das durch Austrittsöffnungen 23 aus der Brennkammer 11 in die Vorratskammer 13 ausströmen kann. Die Austrittsöffnungen 23 sind in radialer Richtung an dem Brennkammergehäuse 12 vorgesehen und nicht druckdicht gegenüber der Vorratskammer 13 ausgeführt, d. h., die Treibstoffladung 22 wird direkt von einem in der Vorratskammer 13 gespeicherten Vorratsgas druckbeaufschlagt. So ergeben sich verbesserte Abbrandeigenschaften, insbesondere ein schneller Abbrand der Treibstoffladung 22 mit einem schnellen Druckanstieg in der Vorratskammer 13. Außerdem kommt es zu einer guten Durchmischung des Treibgases mit dem innerhalb der Vorratskammer 13 befindlichen kalten und inerten Vorratsgas. Das aus der Brennkammer 11 entweichende heiße Treibgas wird einerseits durch das kalte Vorratsgas und andererseits an der Gehäusewand des Vorratskammergehäuses 14 abgekühlt. Durch den Abkühtprozeß und die geringe Strömungsgeschwindigkeit innerhalb der Vorratskammer 13 gehen heiße Partikel innerhalb des Treibstoffgases von einem gasförmigen in einen festen Aggregatzustand über und kondensieren an der Gehäusewand des Vorratskammergehäuses 14.

wenn sich der Innendruck innerhalb der Vorratskammer 13 über einen Grenzwert hinaus erhöht hat, kann die Bersteinrichtung 17 zerbrechen, und die Gasmischung über die Ausströmöffnung 16 in die Filterkammer 19 gelangen und dort zusätzlich gereinigt werden. Anschließend kann die Gasmischung über Abströmöffnungen 24 In den in der Figur nicht gezeigten Luftsack ausströmen und diesen aufblasen.

In der Fig. 2 ist ein Gasgenerator 30 teilweise perspektivisch und teilweise in einem Längsschnitt dargestellt. Der Gasgenerator 30 weist eine Brennkammer 31 mit einem Brennkammergehäuse 32 auf, die rings von einer Vorratskammer 33 mit einem vorratskammergehäuse 34 umgeben ist. Das Brennkammergehäuse 32 ist einenends an einer Rückwand des Vorratskammergehäuses 34, z. B. mit Hilfe einer Schweißverbindung befestigt. Folglich ragt das Brennkammergehäuse 32 weit in die Vorratskammer 33 hinein. Ein Ende 35 des Vorratskammergehäuses verjüngt sich konisch und bildet eine Ausströmöffnung 36, die im, in der Figur gezeigten, nichtaktivierten Zustand des Gasgenerators 30 durch eine Bersteinrichtung 37 verschlossen ist. An die Vorratskammer 33 schließen sich eine Filterkammer 39 und eine Zusatzbrennkammer 40 mit einer zusätzlichen Treibstoffladung 41 an. Die Filterkammer 39 ist von der Zusatzbrennkammer 40 durch eine Trennwand 42 mit darin ausgebildeten Düsen 42 abgetrennt. Ein Teil des Filterkammer- und des Zusatzkammergehäuses wird durch ein rohrförmiges Filterkammergehäuse 38 gebildet.

Nach dem Auslösen einer nicht gezeigten Sensorik wird eine Treibstoffladung 43 durch eine Anzündeeinheit 44 entzündet, so daß die Treibstoffladung 43 abbrennt und ein Treibgas erzeugt. Über ebenfalls nicht druckdicht gegenüber der Vorratskammer 33 ausgeführte Austrittsöffnungen 45 gelangt das Treibgas aus der Brennkammer 31 in die Vorratskammer 33. Dort mischt sich das Treibgas gleichmäßig mit einem kalten und inerten Vorratsgas. Da das Vorratsgas unter Druck steht, wird der Innendruck innerhalb der Vorratskammer 33 noch weiter erhöht. Das Brennkammergehäuse 32 ist rohrförmig ausgebildet und von der Vorratskammer 33 nahezu vollständig umgeben. Durch die radial ausgerichteten Austrittsöffnungen 45 kann das erzeugte Treibgas fein verteilt in das Vorratsgas gelangen. Der Druck innerhalb der Vorratskammer 33 erhöht sich gleichmäßig und schnell aufgrund der vom Vorratsgas druckbeauftragten Treibstoffladung 43 und führt zu einer gleichmäßigen Druckbeaufschlagung der Bersteinrichtung 37. Nach Überschreiten eines Grenzwertes zerbricht die Bersteinrichtigung 37 und gibt die Ausströmöffnung 36 frei. Anschließend gelangt die Gasmischung aus Treibgas und Vorratsgas in die Filterkammer 39 und wird an einem Filter gereinigt. Gleichzeitig oder zu diesem Vorgang zeitversetzt wird die Treibstoffladung 41 in der Zusatzbrennkammer 40 durch eine Anzündeeinheit 46 entzündet.

Anschließend gelangt die Gasmischung über Abströmöffnungen 47 in den in der Figur nicht gezeigten Luftsack. Nach dem Aufblasen des Luftsackes durch die Gasmischung aus Treibgas und Vorratsgas kann der Luftsack zusätzlich durch das durch den Abbrand der Treibstoffladung 41 entstehende weitere Treibgas verstärkt aufgeblasen werden.

## Patentansprüche (Patentansprüche für folgende(n) Vertragsstaat(en): DE, FR, IT)

1. Gasgenerator (10; 30) zum Erzeugen einer Gasmischung aus einem Vorratsgas und einem Treibgas, mit einer, das etwa auf Zimmertemperatur befindliche Vorratsgas aufnehmenden, länglichen Vorratskammer (13; 33), deren Ausströmöffnung (16; 36) im nichtaktivierten Zustand des Gasgenerators (10; 30) durch eine Bersteinrichtung (17; 37) verschlossen ist, und mit einer von der Vorratskammer (13; 33) umgebenen Brennkammer (11; 31), in der nur eine Treibstoffladung (22) angeordnet ist, zur pyrotechnischen Erzeugung des heißen Treibgases, das über Austrittsöffnungen (23; 45) in die Vorratskammer (13; 33) strömen kann, wobei die Austrittsöffnungen (23; 45) der Brennkammer (11; 31) an einer der Ausströmöffnung (16; 36) gegenüberliegenden Seite innerhalb des Gasgenerators (10; 30) angeordnet sind, dadurch gekennzeichnet, daß die Brennkammer zur Vorratskammer (13;33) im nichtaktivierten Zustand offen ist und daß das Treibgas über die Austrittsöffnungen (23; 45) in die Vorratskammer (13; 33) gelangt und dort zu einer Druckerhöhung und zum Zerstören der Bersteinrichtung (17; 37) führt.

2. Gasgenerator nach Anspruch 1, dadurch gekennzeichnet, daß die zylinderförmig ausgebildete Brennkammer (11; 31) an ihrer Außenumfangsfläche mehrere Austrittsöffnungen (23; 45) in radialer Richtung aufweist.

3. Gasgenerator nach Anspruch 1 oder 2, dadurch gekennzeichnet, daß sich das Ende (15; 35) der Vorratskammer (13; 33) konisch verjüngt, das die Ausströmöffnung (16; 36) bildet, und daß die Brennkammer (11; 31) mit einer Rückwand an dem anderen Ende der Vorratskammer (13; 33) befestigt ist.

4. Gasgenerator nach einem der vorhergehenden Ansprüche, dadurch gekennzeichnet, daß zusätzlich zur einstufigen Ausbildung des Gasgenerators (30) mit Vorratskammer (33) und Brennkammer (31) eine Zusatzbrennkammer (40) vorgesehen ist.

5. Gasgenerator nach Anspruch 4, dadurch gekennzeichnet, daß die Zusatzbrennkammer (40) ebenfalls durch die Bersteinrichtung (37) verschlossen ist.

6. Gasgenerator nach Anspruch 4 oder 5, dadurch gekennzeichnet, daß innerhalb der Zusatzbrennkammer (40) Düsen (42) zur Strömungsführung der erzeugten Treibgase im Bereich der Bersteinrichtung (37) vorgesehen sind.

7. Gasgenerator nach Anspruch 6, dadurch gekennzeichnet, daß die Düsen (42) auf die Bersteinrichtung (37) gerichtet sind.

8. Gasgenerator nach einem der vorstehenden Ansprüche, dadurch gekennzeichnet, daß in der Zusatzbrennkammer (40) eine Treibstoffladung (41) angeordnet ist, welche zeitlich nach der Treibladung in der Brennkammer (31) gezündet wird.

9. Gasgenerator nach einem der vorstehenden Ansprüche, dadurch gekennzeichnet, daß die Zusatzbrennkammer (40) außerhalb der Vorratskammer (13; 33) angeordnet ist.

## Patentansprüche (Patentansprüche für folgende(n) Vertragsstaat(en): NL, SE)

1. Gasgenerator (10; 30) zum Erzeugen einer Gasmischung aus einem Vorratsgas und einem Treibgas, mit einer, das etwa auf Zimmertemperatur befindliche Vorratsgas aufnehmenden, länglichen Vorratskammer (13; 33), deren Ausströmöffnung (16; 36) im nichtaktivierten Zustand des Gasgenerators (10; 30) durch eine Bersteinrichtung (17; 37) verschlossen ist, und mit einer von der Vorratskammer (13; 33) umgebenen Brennkammer (11; 31) zur pyrotechnischen Erzeugung des heißen Treibgases, das über Austrittsöffnungen (23; 45) in die Vorratskammer (13; 33) strömen kann, wobei die Austrittsöffnungen (23; 45) der Brennkammer (11; 31) an einer der Ausströmöffnung (16; 36) gegenüberliegenden Seite innerhalb des Gasgenerators (10; 30) angeordnet sind, dadurch gekennzeichnet, daß die Brennkammer zur Vorratskammer (13;33) im nichtaktivierten Zustand offen ist und daß das Treibgas über die Austrittsöffnungen (23; 45) in die Vorratskammer (13; 33) gelangt und dort zu einer Druckerhöhung und zum Zerstören der Bersteinrichtung (17; 37) führt.

2. Gasgenerator nach Anspruch 1, dadurch gekennzeichnet, daß die zylinderförmig ausgebildete Brennkammer (11; 31) an ihrer Außenumfangsfläche mehrere Austrittsöffnungen (23; 45) in radialer Richtung aufweist.

3. Gasgenerator nach Anspruch 1 oder 2, dadurch gekennzeichnet, daß sich das Ende (15; 35) der Vorratskammer (13; 33) konisch verjüngt, das die Ausströmöffnung (16; 36) bildet, und daß die Brennkammer (11; 31) mit einer Rückwand an dem anderen Ende der Vorratskammer (13; 33) befestigt ist.

4. Gasgenerator nach einem der vorhergehenden Ansprüche, dadurch gekennzeichnet, daß zusätzlich zur einstufigen Ausbildung des Gasgenerators (30) mit Vorratskammer (33) und Brennkammer (31) eine Zusatzbrennkammer (40) vorgesehen ist.

5. Gasgenerator nach Anspruch 4, dadurch gekennzeichnet, daß die Zusatzbrennkammer (40) ebenfalls durch die Bersteinrichtung (37) verschlossen ist.

6. Gasgenerator nach Anspruch 4 oder 5, dadurch gekennzeichnet, daß innerhalb der Zusatzbrennkammer (40) Düsen (42) zur Strömungsführung der erzeugten Treibgase im Bereich der Bersteinrichtung (37) vorgesehen sind.

7. Gasgenerator nach Anspruch 6, dadurch gekennzeichnet, daß die Düsen (42) auf die Bersteinrichtung (37) gerichtet sind.

8. Gasgenerator nach einem der vorstehenden Ansprüche, dadurch gekennzeichnet, daß in der Zusatzbrennkammer (40) eine Treibstoffladung (41) angeordnet ist, welche zeitlich nach der Treibladung in der Brennkammer (31) gezündet wird.

9. Gasgenerator nach einem der vorstehenden Ansprüche, dadurch gekennzeichnet, daß die Zusatzbrennkammer (40) außerhalb der Vorratskammer (13; 33) angeordnet ist.

## Claims (Claims for the following Contracting State(s): DE, FR, IT)

1. A gas generator for generating a gas mixture from a reserve gas and a propellant gas, comprising an elongated reservoir chamber (13; 33) accommodating the reserve gas of approximately room temperature, the outflow opening (16; 36) of said reservoir chamber being sealed by a bursting means (17; 37) in the non-activated condition of the gas generator (10; 30), and comprising a combustion chamber (11; 31) surrounded by the reservoir chamber (13; 33), in which combustion chamber only one propellant charge (22) is disposed, for the pyrotechnical generation of the hot propellant gas which can flow into the reservoir chamber (13; 33) through outlet openings (23; 45), the outlet openings (23; 45) of the combustion chamber (11; 31) being disposed inside the gas generator (10; 30) on a side opposite the outflow opening (16; 36), characterized in that in the non-activated condition the combustion chamber is open towards the reservoir chamber (13; 33), and that the propellant gas flows through outlet openings (23; 45) into the reservoir chamber (13; 33), where it leads to an increase in pressure and the destruction of the bursting means (17; 37).

2. The gas generator as claimed in claim 1,
characterized in that at its outer peripheral surface the cylindrical combustion chamber (11; 31) has a plurality of outlet openings (23; 45) in radial direction.

3. The gas generator as claimed in claim 1 or 2,
characterized in that the end (15; 35) of the reservoir chamber (13; 33), which forms the outflow opening (16; 36), is conically tapered, and that a rear wall of the combustion chamber (11; 31) is fixed at the other end of the reservoir chamber (13; 33).

4. The gas generator as claimed in any of the preceding claims, characterized in that in addition to the single-stage design of the gas generator (30) including reservoir chamber (33) and combustion chamber (31) an additional combustion chamber (40) is provided.

5. The gas generator as claimed in claim 4,
characterized in that the additional combustion chamber (40) is likewise sealed by the bursting means (37).

6. The gas generator as claimed in claim 4 or 5,
characterized in that inside the additional combustion chamber (40) nozzles (42) are provided for guiding the flow of the propellant gases generated in the vicinity of the bursting means (37).

7. The gas generator as claimed in claim 6,
characterized in that the nozzles (42) are directed towards the bursting means (37).

8. The gas generator as claimed in any of the preceding claims, characterized in that in the additional combustion chamber (40) a propellant charge (41) is disposed which is ignited at a time after the propellant charge in the combustion chamber (31).

9. The gas generator as claimed in any of the preceding claims, characterized in that the additional combustion chamber (40) is disposed outside the reservoir chamber (13; 33).

## Claims (Claims for the following Contracting State(s): NL, SE)

1. A gas generator for generating a gas mixture from a reserve gas and a propellant gas, comprising an elongated reservoir chamber (13; 33) accommodating the reserve gas of approximately room temperature, the outflow opening (16; 36) of said reservoir chamber being sealed by a bursting means (17; 37) in the non-activated condition of the gas generator (10; 30), and comprising a combustion chamber (11; 31) surrounded by the reservoir chamber (13; 33), for the pyrotechnical generation of the hot propellant gas which can flow into the reservoir chamber (13; 33) through outflow openings (23; 45), the outlet openings (23; 45) of the combustion chamber (11; 31) being disposed inside the gas generator (10; 30) on a side opposite the outlet opening (16; 36), characterized in that in the non-activated condition the combustion chamber is open towards the reservoir chamber (13; 33), and that the propellant gas flows through outlet openings (23; 45) into the reservoir chamber (13; 33), where it leads to an increase in pressure and the destruction of the bursting means (17; 37).

2. The gas generator as claimed in claim 1,
characterized in that at its outer peripheral surface the cylindrical combustion chamber (11; 31) has a plurality of outlet openings (23; 45) in radial direction.

3. The gas generator as claimed in claim 1 or 2,
characterized in that the end (15; 35) of the reservoir chamber (13; 33), which forms the outflow opening (16; 36), is conically tapered, and that a rear wall of the combustion chamber (11; 31) is fixed at the other end of the reservoir chamber (13; 33).

4. The gas generator as claimed in any of the preceding claims, characterized in that in addition to the single-stage design of the gas generator (30) including reservoir chamber (33) and combustion chamber (31) an additional combustion chamber (40) is provided.

5. The gas generator as claimed in claim 4,
characterized in that the additional combustion chamber (40) is likewise sealed by the bursting means (37).

6. The gas generator as claimed in claim 4 or 5,
characterized in that inside the additional combustion chamber (40) nozzles (42) are provided for guiding the flow of the propellant gases generated in the vicinity of the bursting means (37).

7. The gas generator as claimed in claim 6,
characterized in that the nozzles (42) are directed towards the bursting means (37).

8. The gas generator as claimed in any of the preceding claims, characterized in that in the additional combustion chamber (40) a propellant charge (41) is disposed which is ignited at a time after the propellant charge in the combustion chamber (31).

9. The gas generator as claimed in any of the preceding claims, characterized in that the additional combustion chamber (40) is disposed outside the reservoir chamber (13; 33).

## Revendications (Revendications pour l'(les) Etat(s) contractant(s) suivant(s): DE, FR, IT)

1. Générateur de gaz (10 ; 30) pour produire un mélange gazeux à partir d'un gaz de réserve et d'un gaz de propulsion, comportant un réservoir (13 ; 33) allongé recevant un gaz de réserve se trouvant approximativement à température ambiante, dont l'orifice d'écoulement (16 ; 36) est fermé par un dispositif d'éclatement (17 ; 37) à l'état inactivé du générateur de gaz (10 ; 30), et comportant une chambre de combustion (11 ; 31) entourée par le réservoir (13 ; 33), dans laquelle n'est agencée qu'une seule charge de combustible (22), pour la production pyrotechnique du gaz de propulsion chaud qui peut s'écouler par l'intermédiaire d'orifices de sortie (23 ; 45) dans le réservoir (13 ; 33), les orifices de sortie (23 ; 45) de la chambre de combustion (11 ; 31) étant agencés sur un côté opposé à l'orifice d'écoulement (16 ; 36) à l'intérieur du générateur de gaz (10 ; 30), caractérisé en ce qu'à l'état inactivé, la chambre de combustion est ouverte vers le réservoir (13 ; 33) et en ce que le gaz de propulsion parvient par l'intermédiaire des orifices de sortie (23 ; 45) dans le réservoir (13 ; 33) où il entraîne une augmentation de pression et la destruction du dispositif d'éclatement (17 ; 37).

2. Générateur de gaz selon la revendication 1, caractérisé en ce que la chambre de combustion (11 ; 31) réalisée de forme cylindrique présente sur sa surface périphérique extérieure plusieurs orifices de sortie (23 ; 45) en direction radiale.

3. Générateur de gaz selon la revendication 1 ou 2, caractérisé en ce que l'extrémité (15 ; 35) du réservoir (13 ; 33), qui forme l'orifice d'écoulement (16 ; 36), se rétrécit en forme de cône et en ce que la chambre de combustion (11 ; 31) est fixée sur une paroi arrière à l'autre extrémité du réservoir (13 ; 33).

4. Générateur de gaz selon l'une quelconque des revendications précédentes, caractérisé en ce qu'en plus de la réalisation à un étage du générateur de gaz (30) avec réservoir (33) et chambre de combustion (31), il est prévu une chambre de combustion additionnelle (40).

5. Générateur de gaz selon la revendication 4, caractérisé en ce que la chambre de combustion additionnelle (40) est également fermée par le dispositif d'éclatement (37).

6. Générateur de gaz selon la revendication 4 ou 5, caractérisé en ce qu'à l'intérieur de la chambre de combustion additionnelle (40) sont prévues des tuyères (52) pour guider l'écoulement des gaz de propulsion produits dans la zone du dispositif d'éclatement (37).

7. Générateur de gaz selon la revendication 6, caractérisé en ce que les tuyères (42) sont dirigées sur le dispositif d'éclatement (37).

8. Générateur de gaz selon l'une quelconque des revendications précédentes, caractérisé en ce que dans la chambre de combustion additionnelle est agencée une charge de combustible (41) qui est allumée dans le temps après la charge de combustible dans la chambre de combustion (31).

9. Générateur de gaz selon l'une quelconque des revendications précédentes, caractérisé en ce que la chambre de combustion additionnelle (40) est agencée en dehors du réservoir (13 ; 33).

## Revendications (Revendications pour l'(les) Etat(s) contractant(s) suivant(s): NL, SE)

1. Générateur de gaz (10 ; 30) pour produire un mélange gazeux à partir d'un gaz de réserve et d'un gaz de propulsion, comportant un réservoir (13 ; 33) allongé recevant un gaz de réserve se trouvant approximativement à température ambiante, dont l'orifice d'écoulement (16 ; 36) est fermé par un dispositif d'éclatement (17 ; 37) à l'état inactivé du générateur de gaz (10 ; 30), et comportant une chambre de combustion (11 ; 31) entourée par le réservoir (13 ; 33), pour la production pyrotechnique du gaz de propulsion chaud qui peut s'écouler par l'intermédiaire d'orifices de sortie (23 ; 45) dans le réservoir (13 ; 33), les orifices de sortie (23 ; 45) de la chambre de combustion (11 ; 31) étant agencés sur un côté opposé à l'orifice d'écoulement (16 ; 36) à l'intérieur du générateur de gaz (10 ; 30), caractérisé en ce qu'à l'état inactivé, la chambre de combustion est ouverte vers le réservoir (13 ; 33) et en ce que le gaz de propulsion parvient par l'intermédiaire des orifices de sortie (23 ; 45) dans le réservoir (13 ; 33) où il entraîne une augmentation de pression et la destruction du dispositif d'éclatement (17 ; 37).

2. Générateur de gaz selon la revendication 1, caractérisé en ce que la chambre de combustion (11 ; 31) réalisée de forme cylindrique présente sur sa surface périphérique extérieure plusieurs orifices de sortie (23 ; 45) en direction radiale.

3. Générateur de gaz selon la revendication 1 ou 2, caractérisé en ce que l'extrémité (15 ; 35) du réservoir (13 ; 33), qui forme l'orifice d'écoulement (16 ; 36), se rétrécit en forme de cône et en ce que la chambre de combustion (11 ; 31) est fixée sur une paroi arrière à l'autre extrémité du réservoir (13 ; 33).

4. Générateur de gaz selon l'une quelconque des revendications précédentes, caractérisé en ce qu'en plus de la réalisation à un étage du générateur de gaz (30) avec réservoir (33) et chambre de combustion (31), il est prévu une chambre de combustion additionnelle (40).

5. Générateur de gaz selon la revendication 4, caractérisé en ce que la chambre de combustion additionnelle (40) est également fermée par le dispositif d'éclatement (37).

6. Générateur de gaz selon la revendication 4 ou 5, caractérisé en ce qu'à l'intérieur de la chambre de combustion additionnelle (40) sont prévues des tuyères (52) pour guider l'écoulement des gaz de propulsion produits dans la zone du dispositif d'éclatement (37).

7. Générateur de gaz selon la revendication 6, caractérisé en ce que les tuyères (42) sont dirigées sur le dispositif d'éclatement (37).

8. Générateur de gaz selon l'une quelconque des revendications précédentes, caractérisé en ce que dans la chambre de combustion additionnelle est agencée une charge de combustible (41) qui est allumée dans le temps après la charge de combustible dans la chambre de combustion (31).

9. Générateur de gaz selon l'une quelconque des revendications précédentes, caractérisé en ce que la chambre de combustion additionnelle (40) est agencée en dehors du réservoir (13 ; 33).
